# EUROPEAN PATENT APPLICATION

(11) **EP 4 821 415 A1**
(43) Date of publication of application: **14.10.2026**
(21) Application number: 26171224.4
(22) Date of filing: 08.04.2026
(51) Int. Cl.: A47J 42/38

(54) **BEAN GRINDER**

(30) Priority: 09.04.2025 CN 202520663479 U
(71) Applicant: Gyde, Ramsey James, Hong Kong (HK)
(72) Inventor: Gyde, Ramsey James, Hong Kong (HK)
(74) Representative: Murgitroyd & Company

(57) **Abstract**

The present invention discloses a bean grinder, which includes a main body, a cup body, a first weighing system and a second weighing system. The main body is provided with a display device, and the cup body is disposed below a powder outlet of the main body. The first weighing system is disposed in the main body for measuring a first mass in the main body representing a residual quantity in the main body. The second weighing system is disposed in the main body or the cup body for measuring a second mass of powder delivered from the powder outlet into the cup body representing a grinding yield in the cup body. The display device is separately in communication connection with the first weighing system and the second weighing system for displaying the first mass and the second mass.

## Description

### TECHNICAL FIELD

The present invention relates to the field of bean grinder technologies, and in particular, to a bean grinder.

### BACKGROUND

In a complete set of coffee equipment, a bean grinder is an essential component. Coffee enthusiasts place great emphasis on the experience of grinding coffee beans while consuming coffee. With the continuous improvement in living standards, an increasing number of coffee enthusiasts prefer drinking freshly ground coffee. Existing bean grinders are mainly classified into two main categories: manual and electric bean grinders. The manual bean grinders offer a handson grinding experience, allowing the coffee enthusiasts to enjoy an extremely deep sense of involvement and immersion in the process of making hand-ground coffee, while the electric bean grinders free up hands and provide automated grinding control.

As the coffee enthusiasts demand higher coffee quality, their requirements for fineness of grinding particles are also increasing. This enables functions of the bean grinders to meet quality requirements of the coffee enthusiasts, providing a more precise and customizable electric grinding experience. However, existing bean grinders typically lack a weighing system, or are equipped with only one weighing system which is usually designed to measure the weight of ground coffee in a dosing cup, which limits the precision of grinding control of the bean grinders.

### SUMMARY

An objective of the present invention is to overcome deficiencies in the conventional technologies, and specifically to provide a bean grinder which solves the problem that the precision of grinding control is limited and more precise grinding control cannot be achieved when a bean grinder is equipped with only one weighing system.

To achieve the above objective, the present invention provides the following technical solutions.

In a first aspect, the present invention provides a bean grinder. The bean grinder includes a main body, a cup body, a first weighing system, and a second weighing system. The main body is provided with a display device. The cup body is disposed below a powder outlet of the main body. The first weighing system is disposed in the main body and configured to measure a first mass within the main body. The first mass represents a residual quantity of beans and/or powder in the main body. The second weighing system is disposed in the main body or the cup body and configured to measure a second mass of powder delivered from the powder outlet into the cup body, and the second mass represents a grinding yield in the cup body.

The display device is separately in communication connection with the first weighing system and the second weighing system respectively, and is configured to display the first mass and the second mass.

In an embodiment of the present invention, the first weighing system has a first control circuit board, and the second weighing system has a second control circuit board. The first control circuit board and the second control circuit board are separately in communication connection with the display device, the first control circuit board is configured to transmit the first mass to the display device in real time, and the second control circuit board is configured to transmit the second mass to the display device in real time.

In an embodiment of the present invention, the first control circuit board is in communication connection with the second control circuit board, the second control circuit board is also configured to transmit the second mass to the first control circuit board in real time, and the first control circuit board is configured to control the display device to display a trend of a residual quantity of the beans and/or powder in the main body varying over time based on the first mass and the second mass.

In an embodiment of the present invention, the first control circuit board is provided with an electronic grinding adjustment system, and a grinding parameter is calibrated in real time based on the first mass and the second mass through the electronic grinding adjustment system.

In an embodiment of the present invention, the first weighing system includes a first weighing platform and a first load cell, the first weighing platform is mounted at a bottom of the main body, the first load cell is connected to the first weighing platform, and the first load cell is connected to the first control circuit board.

In an embodiment of the present invention, the first load cell has an accuracy of 0.1 grams.

In an embodiment of the present invention, the second weighing system includes a second weighing platform and a second load cell, the second weighing platform is mounted at a bottom of the cup body, the second load cell is connected to the second weighing platform, and the second load cell is connected to the second control circuit board.

In an embodiment of the present invention, the second weighing system includes a second weighing platform and a second load cell, the second weighing platform is mounted at an outer side or a bottom of a grinding chamber in the main body communicating with the powder outlet, the second load cell is suspendedly connected to the second weighing platform, and the second load cell is connected to the second control circuit board.

In an embodiment of the present invention, the second load cell has an accuracy of 0.01 grams.

In an embodiment of the present invention, the cup body has a cup body portion and a cup base portion detachably connected to each other, the second weighing system is installed in the cup base portion, and a second control button is disposed on a lateral surface of the cup base portion.

In an embodiment of the present invention, the main body has a hopper on a top of the main body, a display screen of the display device is disposed on a surface on the top of the main body, and a display direction of the display screen is consistent with an opening direction of the hopper.

In an embodiment of the present invention, the bean grinder also includes a powder receiving platform for placing the cup body. The cup body is magnetically connected to the powder receiving platform.

In an embodiment of the present invention, a tare button is provided in the first weighing system, and the tare button is configured to reset the first weighing system to zero.

In an embodiment of the present invention, a powder delivery pipe is provided on the main body for discharging powder, a modular accessory interface is provided on the powder delivery pipe, and the modular accessory interface is adapted for fit to a coffee appliance accessory.

According to the bean grinder disclosed in the present invention, an additional weighing apparatus is not required, and a user can directly monitors a feeding quantity, and the residual amount in the main body and the grinding yield in the cup body is displayed in real time, helping the user to fully understand an entire grinding process, so that it facilitates the user to adjust a grinding parameter in time according to the displayed data, thereby providing precise grinding control, and thus ensuring the consistency of grinding results.

### BRIEF DESCRIPTION OF THE DRAWINGS

The present invention is described with reference to the following drawings.
FIG. 1 shows a front view of a bean grinder according to a first embodiment of the present invention.
FIG. 2 shows a top perspective view of the bean grinder according to the first embodiment.
FIG. 3 shows a bottom perspective view of the bean grinder according to the first embodiment.
FIG. 4 shows a side view of the bean grinder according to the first embodiment.
FIG. 5 shows a partial cross-sectional view taken along line A-A in FIG. 4.
FIG. 6 shows a cross-sectional view of the bean grinder according to a second embodiment of the present invention;
FIG. 7 shows a trend graph displaying a residual quantity varying over time during residual management operation of a bean grinder according to an embodiment of the present invention.

### Reference numerals:

10 - Main Body; 11 - Hopper; 12 - Powder delivery pipe; 13 - Powder receiving platform; 14 - Display screen; 15 - First control button; 16 - Grinding chamber; 20 - Cup body; 21 - Cup body portion; 22 - Cup base portion; 23 - Second control button; 30 - First weighing system; 31 - First control circuit board; 32 - First weighing platform; 33 - First load cell; 34 - Tare button; 40 - Second weighing system; 41 - Second control circuit board; 42 - Second weighing platform; 43 - Second load cell.

### DETAILED DESCRIPTION OF THE EMBODIMENTS

In order to better understand technical solutions of the present invention, embodiments of the present invention will be described in detail with reference to the accompanying drawings.

It should be clear that the described embodiments represent merely a portion of the embodiments of the present invention, rather than all the embodiments. All other embodiments obtained by a person skilled in the art based on the embodiments of the present invention without creative effort shall fall within the protection scope of the present invention.

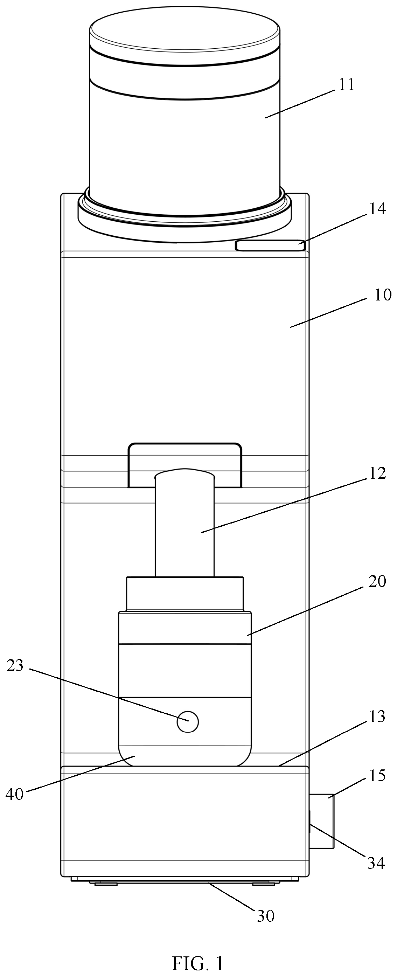

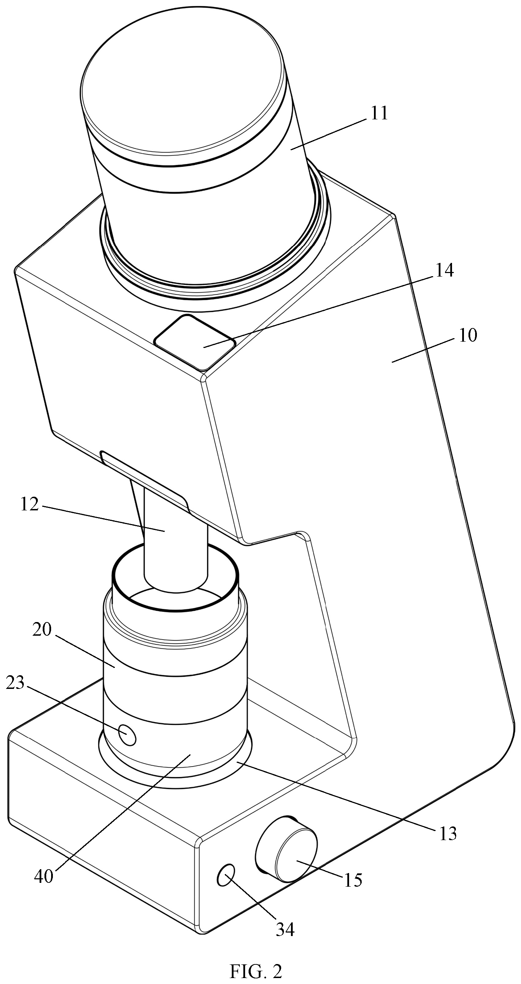

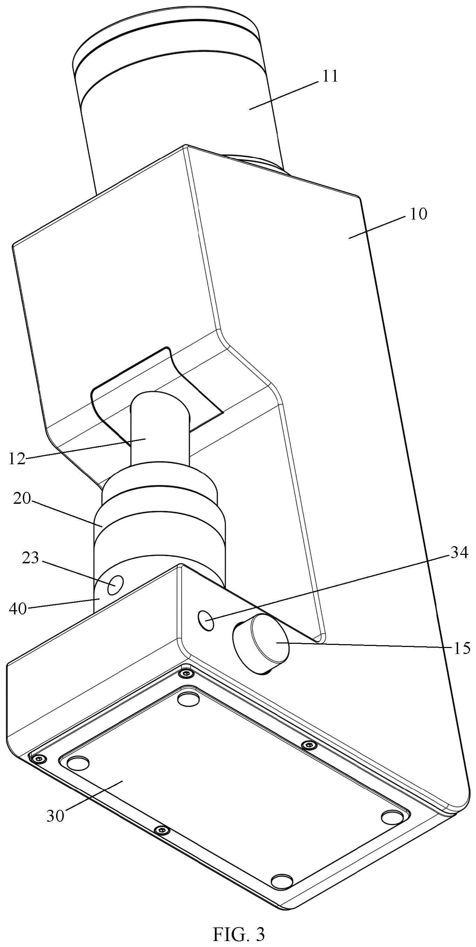

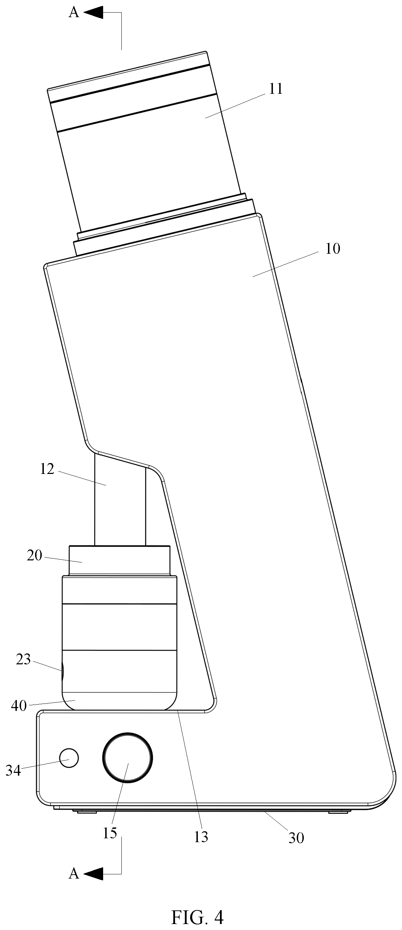

With reference to FIG. 1 to FIG. 4, an embodiment of the present invention provides a bean grinder including a main body 10, a cup body 20, a first weighing system 30 and a second weighing system 40.

The top of the main body 10 is provided with a hopper 11 for feeding material, a powder delivery pipe 12 for discharging powder, and a powder receiving platform 13 for placing the cup body 20. The cup body 20 is placed on the powder receiving platform 13, and is located directly below a powder outlet of the powder delivery pipe 12. A user puts beans (such as coffee beans or soybeans) into the hopper 11 for grinding, and the powder falls into the cup body 20 through the powder delivery pipe 12. The main body 10 is provided with a display device, a display screen 14 of the display device is arranged on a surface at the top, and a display direction of the display screen 14 is consistent with an opening direction of the hopper 11. The display screen 14 may be an OLED screen, a touch screen, or the like, and is used for displaying various grinding parameters to the user. A lateral surface of the main body 10 is provided with a first control button 15 for controlling the main body 20 to turn on for grinding or turn off. The cup body 20 is provided below the powder outlet of the main body 10, and a central axis of the cup body 20 coincides with a central axis of the powder delivery pipe 12. The cup body 20 is fixed on the powder receiving platform 13 by means of magnetic attraction, so that the cup body 20 is prevented from moving when powder is output from the powder outlet of the powder delivery pipe 12.

The first weighing system 30 is provided in the main body 10 and is configured to measure a first mass inside the main body 10, and the first mass represents a residual quantity in the main body 10. The second weighing system 40 is provided in the cup body 20 and is configured to measure a second mass of the powder discharged from the powder outlet into the cup body 20, and the second mass represents the grinding yield in the cup body 20. The display device is in communication with the first weighing system 30 and second weighing system 40, and is configured to display measured values of the first mass (the residual quantity of beans and/or powder in the main body 10) and the second mass (a net grinding production yield). The first weighing system 30 is provided with a tare button 34.

The operation process for the user to grind beans involves the following steps. Firstly, the first weighing system 30 is zeroed by using the tare button 34 to remove a self-weight of the main body 10, and the calibration is performed to ensure the accuracy of grinding control based the weight. The user then puts beans into the hopper 11, and at this point, the first mass measured by the first weighing system 30 represents is the user's feed amount, so that the user is able to monitor the feed amount on the display device in real-time without an additional weighing apparatus. Next, the second weighing system 40 is turned on, and the display device shows the second mass as 0.0 g. The user then presses a grind button to start grinding. Since the powder will fall into the cup body 20 through the powder delivery pipe 12, the first mass measured by the first weighing system 30 continuously decreases, indicating that the residual quantity of the beans and powder in the main body 10 continuously decreases, and meanwhile, the second mass measured by the second weighing system 40 continuously increases, indicating that the grinding yield in the cup body 20 continuously increases. The user may monitor the remaining residual quantity in the main body 10 and the actual grinding yield in the cup body 20 in real time through the display device. In this way, the user may adjust other grinding parameters according to the first mass and the second mass displayed by the display device, so that the residual quantity of the beans and/or powder in the main body 10 is managed reasonably.

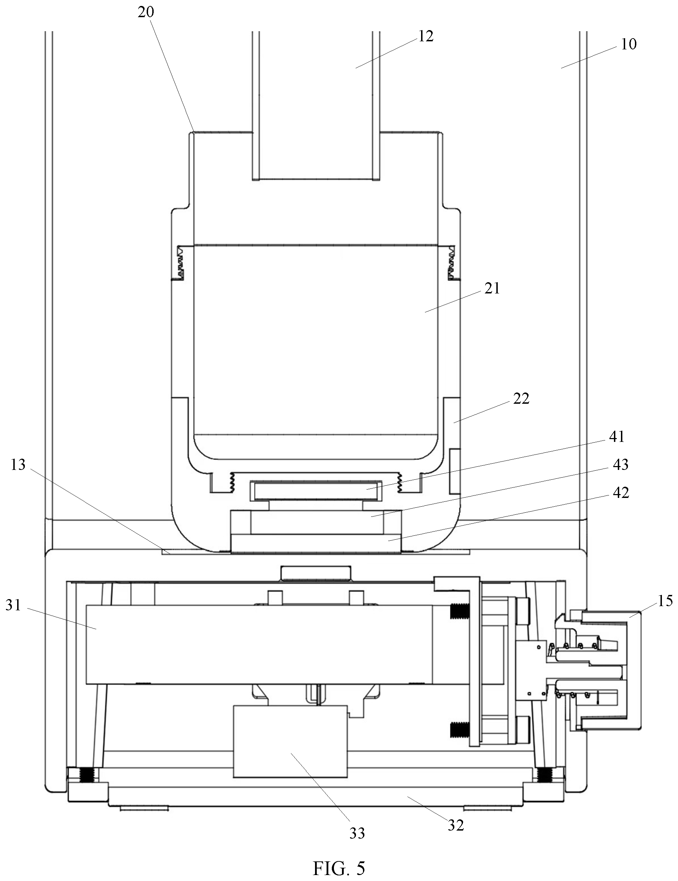

Referring to FIG. 5, the first weighing system 30 has a first control circuit board 31, and the second weighing system 40 has a second control circuit board 41. The first control circuit board 31 and the second control circuit board 41 are separately in communication connection with the display device. This communication connection may be one of the following communication manners: wired connection, Bluetooth, WIFI, Near Field Communication (NFC), radio frequency communication, or the like. In this embodiment, the communication method preferably adopts Bluetooth. The first control circuit board 31 transmit the first mass to the display device in real time via the Bluetooth, and the second control circuit board 41 transmits the second mass to the display device in real time via the Bluetooth. In the aforementioned implementation, the display device merely displays the readings of the first mass and second mass in real time, and the first control circuit board 31 and second control circuit board 41 are used for controlling the first weighing system 30 and second weighing system 40 to weigh separately.

In another implementation, the first control circuit board 31 may also perform residue management for the bean grinder, that is, the first control circuit board 31 serves as a main control circuit board of the bean grinder. The first control circuit board 31 is in communication connection with the second control circuit board 41 in a communication manner such as Bluetooth. The second control circuit board 41 transmits the second mass to the first control circuit board 31 in real time via Bluetooth. The first control circuit board 31 is configured to control the display device to display a trend of the residual quantity of the beans and/or powder in the main body 10 varying over time according to the first mass and the second mass.

In another implementation, the first control circuit board 31 is provided with an electronic grinding adjustment system (not shown in the drawings), and a grinding parameter is calibrated in real time based on the first mass and the second mass through the electronic grinding adjustment system. The grinding parameters include a rotation speed of an inner burr, a rotation speed of an outer burr, or the like. The electronic grinding adjustment system receives the first mass and the second mass. By analyzing a decreasing rate of the first mass and an increasing rate of the second mass, current values of the grinding parameters are calculated. Then, the current values of the grinding parameters are compared with set values of the grinding parameters. If the current value deviates from the set value thereof, the corresponding grinding parameter is calibrated to the set value.

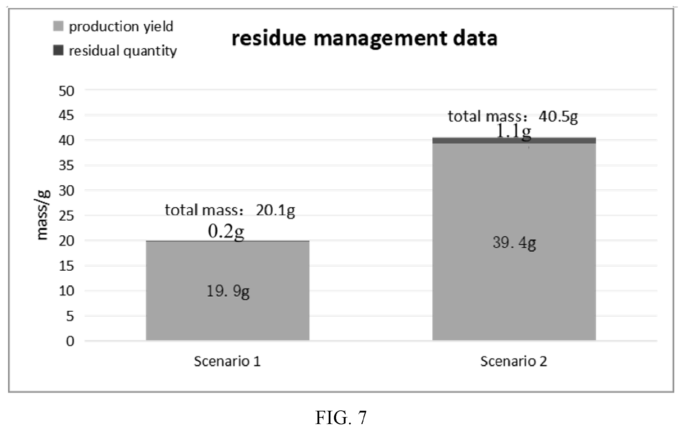

Irrespective of which of the above three implementations is adopted, the display device may always display the residual quantity and grinding yield in real time, helping the user to understand how various factors affect the grinding of the beans. Especially in scenarios of grinding the coffee beans, coffee enthusiasts generally have higher requirements for the grinding of powder, and the bean grinder of the above embodiment allows the user to monitor these variable factors in real time. By displaying the readings of the first mass and the second mass through the display device, the user is able to observe how factors such as a grind size, a bean variety, a shape of a grinding burr, and environmental conditions directly affect the residual quantity of the powder in the main body 10 and the grinding yield of the powder in the cup body 20. Furthermore, the first control circuit board 31 (functioning as the main control board) may also control the display device to display a residual trend, that is the trend that the residual quantity of the powder in the main body 10 varying over time. This helps the user to understand how different coffee types, environmental, or grinding settings affect the residual quantity. As shown in FIG. 7, by displaying the data through a chart, the user can more conveniently adjust the grinding process, thus ensuring that result of each grinding process is more consistent.

Referring again to FIG. 5, in the bean grinder of the above embodiment, the first weighing system 30 includes a first weighing platform 32 and a first load cell 33. The first weighing platform 32 is mounted at a lowermost portion of the main body 10. The first load cell 33 is connected to the first weighing platform 32. The first load cell 33 is connected to the first control circuit board 31. In this way, when a total weight of the main body 10 changes, it will be detected by the first load cell 33, thereby changing the reading of the first mass. The first load cell 33 has an accuracy of 0.1 grams.

The second weighing system 40 includes a second weighing platform 42 and a second load cell 43, the second weighing platform 42 is mounted at a lowermost portion of the cup body 20, and the second load cell 43 is connected to the second weighing platform 42. The second load cell 43 is connected to the second control circuit board 41, such that any weight variation of the cup body 20 is able to be detected by the second load cell 43, thereby changing the reading of the second mass. The second load cell 43 has an accuracy of 0.01 grams. In the above embodiment, the second weighing system 40 is integrated into the cup body 20, enabling the second weighing system 40 to direct measure the grinding yield, so that the reading of the second mass displayed on the display screen 14 is the measured value of the second mass in the cup body 20.

In an alternative of the above embodiment, the cup body 20 includes a detachably connected cup body portion 21 and cup base portion 22. The second weighing system 40 is mounted in the cup base portion 22, and a second control button 23 is disposed on a side surface of the cup base portion 22.

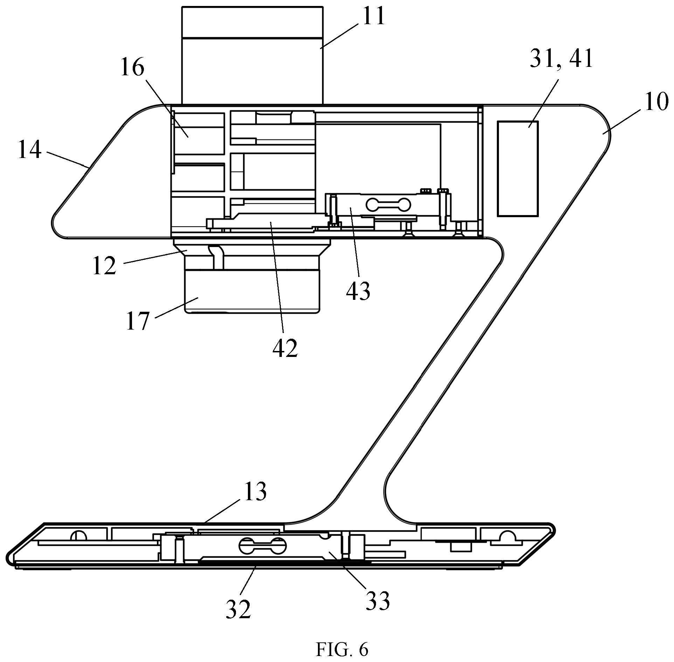

Referring to FIG. 6, in the bean grinder of another alternative embodiment of the present invention, the installation position of the first weighing system 30 is the same as that of the first weighing system 30 in the above embodiment. The difference lies in that the installation position of the second weighing system 40 is different, that is the second weighing system 40 in the embodiment is installed in the main body 10. The second weighing system 40 includes a second weighing platform 42 and a second load cell 43, and the second weighing platform 42 is mounted at an outer side or a bottom of a grinding chamber 16 in the main body 10 that communicates with the powder outlet. The second load cell 43 is connected to the second weighing platform 42 in a suspended manner and is fixed in the main body 10, and the second load cell 43 is connected to the second control circuit board 41. In this way, when a weight change occurs in the grinding chamber 16, it enables the second weighing platform 42 to undergo a vertical displacement, thereby allowing the second load cell 43 to detect this weight variation, and consequently, the reading of the second mass changes. The first load cell 33 has an accuracy of 0.1 grams. Unlike the above embodiment where the second weighing system 40 is provided in the cup body 20, in the alternative embodiment, the second weighing system 40 is connected to the grinding chamber 16 of the main body 10 in a suspended manner. Before grinding, the weight of the powder in the grinding chamber 16 is measured as an initial value. During the grinding process, the second weighing system 40 measures the current weight of the powder in the grinding chamber 16 as a measured value, and the second control circuit board 41 calculates a difference value between the initial value and the measured value as the reading of the second mass, which is then displayed on the display screen 14. Furthermore, in the alternative embodiment, the powder delivery pipe 12 may be provided with a modular accessory interface 17 to adapt to more different types of coffee appliance accessories, for example, a coffee cup, a coffee filter, and the like. Additionally, in the alternative embodiment, the second control circuit board 41 may also be integrated with the first control circuit board 31.

The bean grinder according to the alternative embodiment is provided with two highprecision weighing systems. The first weighing system 30 is integrated in the bottom of the main body 10, and has an accuracy of 0.1 grams. The second weighing system 40 is integrated in the cup body 20, and has an accuracy of 0.01 grams. These two systems can provide data of the grinding yield, the residue quantity of the powder, and various factors that affect grinding performance in real time. The two weighing systems communicate with the control circuit board of the main body 10 (which may be the main control circuit board of the main body 10, or the first control circuit board 31 of the first weighing system 30) in a wireless manner, so that the user can monitor the data in real time and precisely calibrate the grinding weight to 0.05 grams.

According to the bean grinder provided in the present invention, an additional weighing apparatus is not required, and the user can directly monitor the feed quantity. By providing real-time data feedback, ultra-precise grinding control is provided to ensure consistency of the grinding results. Meanwhile, it also may allow the user to comprehensively understand the entire grinding process to take into account for multiple factors affecting the residual quantity and the grinding yield. Additionally, it provides the user with useful information to help the user to understand an operating status of the beam grinder and make adjustment according to the data to improve the extraction effect of the coffee. In addition, the coffee grinder provided by the embodiment of the present invention may provide a "Precision Mode", thereby enabling the user to fine-tune the settings of the two weighing systems to further improve the accuracy, especially for specific coffee or grinding requirements. In an implementation, the first control circuit board (or the main control board) may be connected with the electronic grinding adjustment system to automatically adjust the grinding setting based on the data and the extraction performance of the coffee machine.

It should be understood that, the descriptions of the specific embodiments above are merely provided to illustrate the technical solutions and characteristics of the present invention, aiming to enable a person skilled in the art to comprehend the content of the present invention and implement it accordingly. However, the present invention is not limited to these particular implementations above-mentioned. Any variations or modifications that is made by those skilled in the art within the protection scope defined by the claims of the present invention shall remain within the protection scope of the present invention.

## Claims

1. A bean grinder, comprising:
a main body (10), a cup body (20), a first weighing system (30) and a second weighing system (40), wherein
the main body (10) is provided with a display device, and the cup body (20) is disposed below a powder outlet of the main body (10);
the first weighing system (30) is disposed in the main body (10) and is configured to measure a first mass inside the main body (10), the first mass representing a residual quantity of beans and/or powder in the main body (10);
the second weighing system (40) is disposed in the main body (10) or the cup body (20) and configured to measure a second mass of the powder transferred from the powder outlet into the cup body (20), the second mass representing a grinding yield in the cup body (20); and
the display device is in communication connection with the first weighing system (30) and the second weighing system (40), separately, and is configured to display the first mass and the second mass.

2. The bean grinder according to claim 1, wherein the first weighing system (30) has a first control circuit board (31), the second weighing system (40) has a second control circuit board (41), the first control circuit board (31) and the second control circuit board (41) are separately in communication connection with the display device, the first control circuit board (31) is configured to transmit the first mass to the display device in real time, and
the second control circuit board (41) is configured to transmit the second mass to the display device in real time.

3. The bean grinder according to claim 2, wherein the first control circuit board (31) is in communication connection with the second control circuit board (41), the second control circuit board (41) is further configured to transmit the second mass to the first control circuit board (31) in real time, and the first control circuit board (31) is configured to control the display device to display a trend of a residual quantity of the beans and/or the powder in the main body (10) varying over time based on the first mass and the second mass.

4. The bean grinder according to claim 3, wherein the first control circuit board (31) is provided with an electronic grinding adjustment system, and a grinding parameter is calibrated in real time based on the first mass and the second mass through the electronic grinding adjustment system.

5. The bean grinder according to any one of claims 2 to 4, wherein the first weighing system (30) comprises a first weighing platform (32) and a first load cell (33), the first weighing platform (32) is mounted at a bottom of the main body (10), the first load cell (33) is connected to the first weighing platform (32), and the first load cell (33) is connected to the first control circuit board (31).

6. The bean grinder according to claim 5, wherein the first load cell (33) has an accuracy of 0.1 grams.

7. The bean grinder according to any one of claims 2 to 6, wherein the second weighing system (40) comprises a second weighing platform (42) and a second load cell (43), the second weighing platform (42) is mounted at a bottom of the cup body (20), the second load cell (43) is connected to the second weighing platform (42), and the second load cell (43) is connected to the second control circuit board (41).

8. The bean grinder according to any one of claims 2 to 6, wherein the second weighing system (40) comprises a second weighing platform (42) and a second load cell (43), the second weighing platform (42) is mounted at an outer side or a bottom of a grinding chamber in the main body (10) communicating with the powder outlet, the second load cell (43) is suspendedly connected to the second weighing platform (42), and the second load cell (43) is connected to the second control circuit board (41).

9. The bean grinder according to claim 7 or claim 8, wherein the second load cell (43) has an accuracy of 0.01 grams.

10. The bean grinder according to any one of claims 2 to 9, wherein the cup body (20) has a cup body portion (21) and a cup base portion (22) detachably connected to each other, the second weighing system (40) is installed in the cup base portion (22), and a second control button is disposed on a lateral surface of the cup base portion (22).

11. The bean grinder according to any one of claims 1 to 10, wherein the main body (10) has a hopper (11) on a top of the main body (10), a display screen (14) of the display device is disposed on a surface on the top of the main body (10), and a display direction of the display screen (14) is consistent with an opening direction of the hopper (11).

12. The bean grinder according to any one of claims 1 to 11, further comprising a powder receiving platform (13) for placing the cup body (20), wherein the cup body (20) is magnetically connected to the powder receiving platform (13).

13. The bean grinder according to any one of claims 1 to 12, wherein a tare button (34) is provided in the first weighing system (30), and the tare button (34) is configured to reset the first weighing system (30) to zero.

14. The bean grinder according to any one of claims 1 to 13, wherein a powder delivery pipe (12) is provided on the main body (10) for discharging powder, a modular accessory interface is provided on the powder delivery pipe (12), and the modular accessory interface is adapted for fit to a coffee appliance accessory.
